# FASCICULE DE BREVET EUROPEEN

(11) **EP 0 728 264 B1**
(45) Date de publication et mention de la délivrance du brevet: **17.03.1999**
(21) Numéro de dépôt: 95900814.5
(22) Date de dépôt: 08.11.1994
(51) Int. Cl.: F16C 39/06

(54) **DISPOSITIF DE MONTAGE ET D'ENTRAINEMENT D'UNE BROCHE, NOTAMMENT D'UNE BROCHE TEXTILE**
MONTAGE UND ANTRIEBSVORRICHTUNG EINER SPINDEL, INSBESONDERE EINER TEXTILSPINDEL
DEVICE FOR MOUNTING AND DRIVING A SPINDLE, PARTICULARLY A TEXTILE SPINDLE

(30) Priorité: 09.11.1993 FR 9313332
(43) Date de publication de la demande: 28.08.1996
(73) Titulaire: SOCIETE DE MECANIQUE MAGNETIQUE, F-27950 Saint-Marcel (FR)
(72) Inventeur: BRUNET, Maurice, F-27950 Sainte-Colombe-près-Vernon (FR)
(74) Mandataire: Thévenet, Jean-Bruno
(86) Numéro de dépôt international: FR9401303
(87) Numéro de publication internationale: WO9513480

(56) Documents cités:
- EP-A- 0 512 516
- US-A- 4 180 946
- PATENT ABSTRACTS OF JAPAN vol. 14, no. 193 (M-0963) 19 Avril 1990 & JP,A,02 035 217 (KOYO SEIKI) 5 Février 1990
- VDI - ZEITSCHRIFT, vol.132, no.12, Décembre 1990, DUSSELDORF, DE pages 77 - 79, XP176613 HÖRSEMANN 'Prozessregelung beim Innenrundschleifen mit aktiv magnetgelagerten Spindeln'

## Description

La présente invention a pour objet un dispositif de montage et d'entraînement d'une broche textile comprenant un tube qui est monté par rapport à un bâti à l'aide de premier et deuxième paliers radiaux et est entraîné en rotation à l'aide d'un moteur électrique. On connaît différents types de broches devant tourner à grande vitesse, notamment des broches textiles de filatures. Un exemple de telle broche comprend un tube vertical pouvant présenter un diamètre interne de l'ordre de 30 à 40 mm, qui est monté à l'intérieur d'un bâti dans un logement avec un jeu prédéterminé de façon que ce tube puisse tourner sans contact avec la paroi du logement. Le tube est prolongé à sa partie supérieure par une partie de diamètre réduit qui est montée sur des paliers classiques tels que des roulements à billes, et est entraînée en rotation par un moteur électrique. Un fil à mettre sous forme de bobine est introduit à l'intérieur du tube dans lequel il peut être entraîné par la force centrifuge contre la paroi interne du tube de manière à constituer à l'intérieur de ce tube une bobine de fil qui sera ensuite extraite de ce tube par l'ouverture ménagée à la partie inférieure. Le tube est entraîné par le moteur à des vitesses de rotation de l'ordre de par exemple 300 tr/s.

Les broches de ce type, équipées d'une suspension mécanique à roulements à billes et montées en porte-à-faux, sont sujettes à des instabilités de rotation qui amènent des perturbations dans l'effet centrifuge et réduisent la durée de vie du dispositif. Par ailleurs, les dimensions de la broche et la vitesse de rotation de celle-ci sont limitées par la suspension mécanique utilisée, ce qui réduit les cadences et les capacités de production.

On connaît par ailleurs par le document EP-A- 0 512 516 un dispositif de support d'un élément tubulaire à l'aide de paliers magnétiques radiaux à flux axial associés à un dispositif d'entraînement magnétique de l'élément tubulaire. Les éléments statoriques des paliers et du dispositif d'entraînement sont en contact avec l'atmosphère tandis que l'élément tubulaire rotatif est placé dans le vide et séparé des éléments statoriques des paliers et du dispositif d'entraînement par une chemise étanche.

La présente invention vise à remédier aux inconvénients précités et à permettre le montage d'organes tubulaires tournants, tels que des broches, dont la fiabilité, la durée de vie et la capacité de production sont augmentées.

L'invention a encore pour but de réaliser un montage de broche présentant un minimum de perturbations dans l'effet centrifuge et dont les pertes par frottements aérodynamiques sont également très fortement réduites.

Ces buts sont atteints grâce à un dispositif de montage et d'entraînement d'une broche notamment d'une broche textile comprenant un tube qui est monté par rapport à un bâti à l'aide de premier et deuxième paliers magnétiques radiaux à flux axial et est entraîné en rotation à l'aide d'un moteur caractérisé en ce que le tube est monté sans contact par rapport au bâti en forme de carter, à l'aide desdits premier et deuxième paliers magnétiques radiaux à flux axial du type actifs, et disposés respectivement à une première extrémité du tube et à une deuxième extrémité de celui-ci et entre lesquels est interposé ledit moteur du type moteur électrique, en ce que chacun des paliers magnétiques actifs radiaux comprend un circuit magnétique de stator composé de quatre éléments à flux axial jointifs selon des plans axiaux et répartis autour du tube, et en ce que des moyens sont prévus pour créer à l'intérieur de la broche au niveau de l'entrefer des paliers magnétiques radiaux et du moteur électrique une pression réduite de l'ordre de quelques centaines de pascals à quelques milliers de pascals.

Du fait même de l'absence de contact mécanique entre le tube et le bâti, grâce à la mise en oeuvre d'une suspension magnétique active, la broche selon l'invention présente une fiabilité et une durée de vie accrus. La dépression créée au niveau de l'entrefer des paliers magnétiques radiaux et du moteur électrique contribue à diminuer de façon significative les pertes par frottements aérodynamiques, même avec une vitesse de rotation élevée par exemple de l'ordre de 800 à 1000 tours par seconde.

Malgré l'utilisation d'un rotor tubulaire massif non feuilleté, les pertes éléctromagnétiques dans le rotor coopérant avec les paliers magnétiques radiaux sont très faibles du fait de la mise en oeuvre de circuits magnétiques de stator à flux axial réalisés en plusieurs éléments jointifs sans encoche.

Selon une caractéristique particulière avantageuse, qui simplifie le montage, les circuits magnétiques de stator à quatre éléments jointifs des paliers magnétiques actifs radiaux sont composés chacun de deux sous-ensembles de quatre éléments jointifs réunis selon un plan de joint radial et maintenus assemblés par des pinces ou circlips.

Ce type de montage contribue à simplifier et réduire le coût de fabrication de l'ensemble du dispositif.

De préférence, les circuits magnétiques de stator des paliers magnétiques actifs radiaux sont réalisés en poudre de fer à grains isolés agglomérés par pressage isostatique à chaud.

Selon un mode particulier de réalisation, au moins l'un des premier et deuxième paliers magnétiques actifs radiaux comprend un circuit magnétique de stator avec un deuxième sous-ensemble de quatre éléments jointifs, pour jouer également le rôle de palier axial vis-à-vis d'une bride horizontale du tube.

La dépression régnant au niveau de l'entrefer des paliers magnétiques radiaux et du moteur électrique, qui peut être par exemple de l'ordre de 1300 pascals, peut être réalisée lors du montage initial ou être maintenue en permanence en fonctionnement à l'aide d'une pompe à vide de faible débit.

La broche selon l'invention peut comprendre à au moins l'une de ses extrémités une bague flottante d'étanchéité fixée par une membrane souple sur le carter de la broche.

Dans ce cas, la bague flottante peut être réalisée en graphite, céramique ou carbone, tel que le matériau carbone diamant ADLC, et peut présenter une course flexible dans le sens radial limitée à quelques centièmes de millimètre de manière à constituer également un palier de secours.

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en coupe axiale d'un mode particulier de réalisation d'un dispositif de montage et d'entraînement d'une broche conformément à la présente invention,
- la figure 2 est une vue en coupe, selon un plan de joint radial, d'un ensemble d'électroaimants de palier magnétique actif radial selon un mode particulier de réalisation de l'invention,
- les figures 3 et 4 sont des vues en coupe respectivement selon les lignes III-III et IV-IV de la figure 2, et
- la figure 5 est une vue de détail, en coupe axiale, montrant une variante de réalisation d'un palier magnétique actif radial qui est applicable à la présente invention et joue également le rôle de palier magnétique axial.

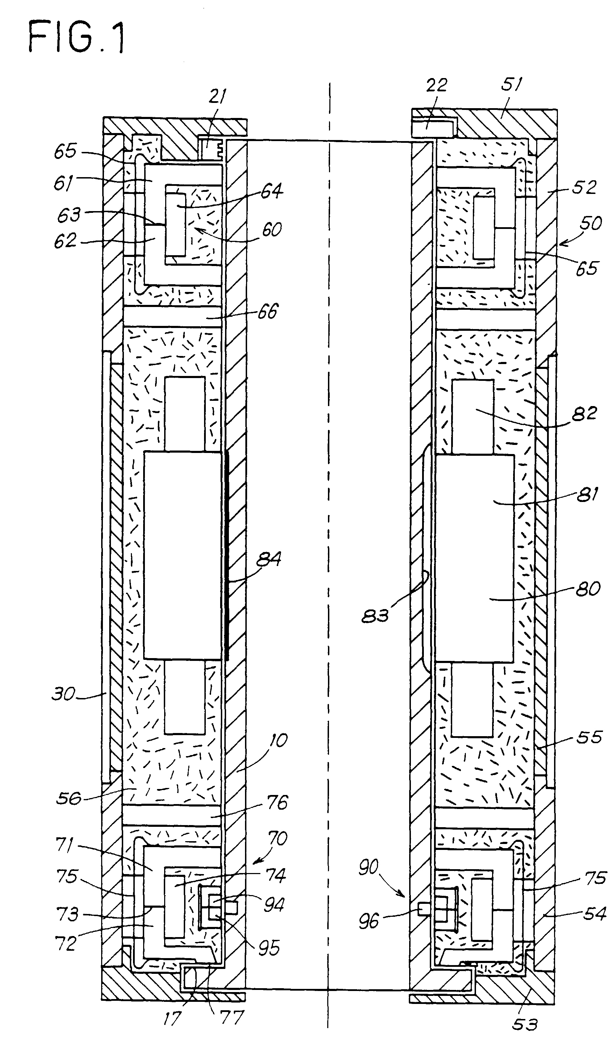

La figure 1 montre un exemple de dispositif conforme à l'invention, de montage et d'entraînement d'une broche telle qu'une broche textile de filature qui est avantageusement positionnée verticalement.

Un carter extérieur 50 est composé de plusieurs éléments cylindriques 52, 54, 55 juxtaposés et de parois frontales 51, 53 séparées pour faciliter le montage des éléments incorporés dans le carter 50.

Un tube métallique 10 pouvant présenter par exemple une longueur de l'ordre de 200 mm et un diamètre interne de l'ordre de 30 à 50 mm est monté sans contact. à l'intérieur du carter 50 à l'aide d'un palier magnétique actif radial supérieur 60 et d'un palier magnétique actif radial inférieur 70 dont la structure sera décrite plus loin de façon détaillée.

Un moteur électrique 80 qui peut être du type asynchrone à rotor massif et comprend un inducteur statorique 81 muni de bobinages 82 est disposé entre les paliers magnétiques radiaux 60 et 70. La surface extérieure du tube 10 est de préférence recouverte d'un faible dépôt de cuivre 84 ou munie de rainures 83 dans sa partie située en regard du moteur électrique 80 prévu pour l'entraînement en rotation du tube 10 afin de diminuer les pertes par glissement. En revanche, le tube 10 reste massif sans feuilletage particulier dans ses parties supérieure et inférieure situées en regard des paliers magnétiques radiaux 60, 70.

Un circuit imprimé souple 30 est disposé sur le carter 50 au voisinage de sa partie centrale 55. Des connexions avec des fils (non représentés sur le dessin) d'alimentation des bobinages 82 du moteur 80, des bobines 64, 74 des paliers radiaux 60, 70 et de détecteurs 66, 76 de la position du rotor 10, sont réalisées au niveau du circuit imprimé souple 30 qui comporte également des connecteurs de liaison avec des circuits extérieurs de commande du moteur 80 et des paliers magnétiques 60, 70.

Avantageusement, les divers éléments d'entraînement en rotation du tube 10 et de suspension de celui-ci sont intégrés par surmoulage à l'intérieur du boîtier 50 et présentent des positions définies avec précision par rapport au tube 10.

En fonctionnement, le tube 10 constituant la broche tournante peut être entraîné en rotation à des vitesses de l'ordre de 800 à 1000 tours par seconde. Les paliers magnétiques actifs 60, 70 et le moteur électrique 80 sont tout-à-fait adaptés pour permettre de telles vitesses de rotation du tube 10. Toutefois, dans des conditions normales de fonctionnement, c'est-à-dire à une pression ambiante de l'ordre de 1 bar, et dans le cas d'une broche comprenant un tube 10 ayant un diamètre interne de l'ordre de 40 à 50 mm et tournant à une vitesse de l'ordre de 900 tours par seconde avec un entrefer d'environ 1 mm, les pertes aérodynamiques dans l'entrefer des paliers magnétiques 60, 70 et du moteur 80 sont de l'ordre de 200 à 400 watts, ce qui peut être une gêne au bon fonctionnement du système.

Conformément à l'invention, pour remédier à l'inconvénient précité, la pression ambiante à l'intérieur de la machine tournante est réduite à une valeur comprise entre quelques centaines de pascals et quelques milliers de pascals, par exemple à environ 1300 pascals. De la sorte, les pertes par frottement aérodynamique dans l'entrefer des paliers magnétiques et du moteur sont considérablement diminuées et le système peut fonctionner très correctement avec une vitesse de rotation élevée qui conduit à un excellent rendement.

La dépression dans l'entrefer entre le tube 10 et les éléments statiques immobilisés par surmoulage peut être créée lors d'une opération initiale de mise en oeuvre de la broche ou être maintenue en permanence en fonctionnement par une pompe à vide de très faible débit associée à la broche.

La bonne étanchéité de la sortie du rotor 10 est assurée par une bague flottante 21 ou 22, centrée par un effet de palier à air autour du rotor 10 et fixée par une membrane souple sur la pièce 51 constituant une extrémité frontale du carter 50. Une bague flottante semblable à l'une des bagues 21 ou 22 peut également être rapportée par l'intermédiaire d'une membrane souple sur la pièce frontale inférieure 53 du carter 50.

Comme on l'a représenté sur les deux demi-vues à la partie supérieure de la figure 1, la bague flottante d'étanchéité destinée à permettre de limiter la pression de l'air dans l'entrefer de la broche peut être montée souple dans le sens axial (bague 22) ou dans le sens radial (bague 21) suivant le type d'étanchéité recherchée. Une bague flottante souple dans le sens radial, comme la bague 21, est en général plus favorable pour éviter la charge due à la pression atmosphérique.

Par ailleurs une bague flottante d'étanchéité telle que la bague 21 peut également servir de palier auxiliaire lisse si elle est réalisée, au mois partiellement, en un matériau de la famille des carbones ou graphites. De façon plus particulière, une bague flottante servant de palier auxiliaire lisse peut présenter une surface de contact réalisée en céramique ou en carbone diamant ADLC (Amorphous Diamond Like Carbon). Pour assurer correctement sa fonction de bague d'étanchéité et de palier de secours, une bague flottante peut présenter une course flexible limitée à quelques centièmes de millimètres et être réalisée de manière à retrouver un appui positif à une distance de l'ordre de 0,10 à 0,15 mm, de façon à jouer alors la fonction de palier de secours en cas de défaillance ou d'arrêt de la suspension magnétique active. On notera que la fixation souple de la bague d'étanchéité servant aussi de palier de secours contribue à amortir les vibrations en cas d'atterrissage.

On décrira maintenant de façon plus détaillée un exemple de paliers magnétiques actifs qui à la fois présentent une configuration optimisant leur fonctionnement et sont d'un montage particulièrement aisé, facilitant ainsi la fabrication de la broche.

Les paliers magnétiques radiaux 60, 70 coopèrent directement avec la paroi massive du tube 10 en matériau ferromagnétique et comportent des stators dont la forme est telle qu'elle minimise les variations de champ magnétique. Les électro-aimants de stator des paliers radiaux 60, 70 présentent une forme homopolaire, c'est-à-dire sont à flux axial. Ils présentent avantageusement une culasse d'électro-aimant constituée en deux parties 61, 62 respectivement 71, 72 plaquées l'une contre l'autre avec un plan de joint 63 respectivement 73 situé dans un plan radial. Des pinces ou circlips 65 respectivement 75 permettent de maintenir serrées l'une contre l'autre les deux moitiés de culasse 61, 62 respectivement 71, 72. Les bobines 64 respectivement 74 peuvent facilement être préfabriquées et introduites autour d'une première partie de culasse 61 respectivement 71 avant assemblage des deux parties 61, 62 respectivement 71, 72.

Les électro-aimants 61, 62 et 71, 72 peuvent être réalisés en poudre de fer à grains isolés agglomérés, donc directement à la cote, par pressage isostatique sans aucune reprise d'usinage.

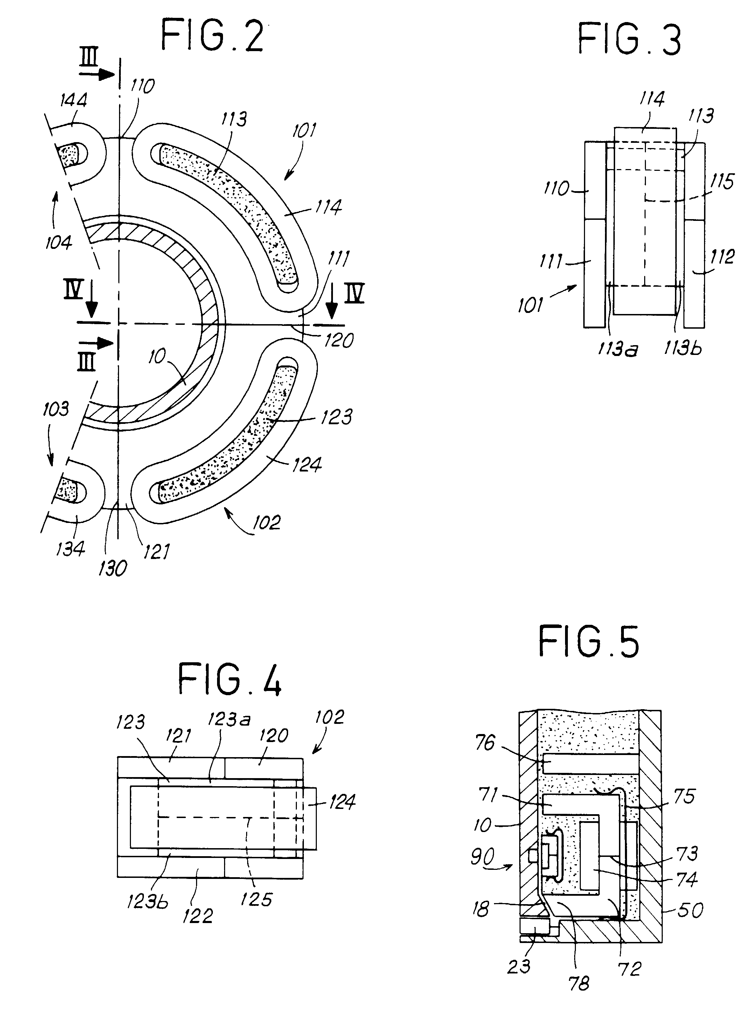

Selon une caractéristique importante, illustrée sur les figures 2 à 4, le stator de chaque palier magnétique radial 60, 70 est réalisé en quatre éléments 101 à 104 jointifs à flux axial sans encoche entre ces quatre éléments. Ceci contribue à éviter en position verticale de la broche les pertes magnétiques dans le rotor, ou les réduit considérablement en position horizontale.

On voit sur la figure 2 les quatre éléments jointifs 101 à 104 d'un électro-aimant de palier radial répartis en couronne autour d'un passage central dans lequel est engagé le tube 10 qui constitue le rotor du palier magnétique par lequel se referment les lignes de champ magnétique. Les figures 3 et 4 montrent plus particulièrement les éléments 101 et 102 représentés sur la droite de la figure 2. Les quatre éléments 101 à 104 qui comprennent chacun une bobine 114, 124, 134, 144 sont identiques.

L'élément 101 comprend une structure en U avec deux branches latérales parallèles 111, 112 en forme de quarts de couronne disposées dans des plans radiaux et une branche arquée 113 réunissant les branches latérales 111, 112 et autour de laquelle est disposée une bobine 114. Comme cela a été indiqué précédemment, le montage est facilité si chaque élément tel que l'élément 101 est réalisé en deux parties séparées par un plan de joint 115 situé dans un plan radial. La division de la branche arquée 113 en deux moitiés 113a, 113b solidaires respectivement des branches parallèles planes 111, 112 permet en effet l'introduction aisée d'une bobine 114 préfabriquée avant clipsage des deux moitiés de circuit magnétique 111, 113a et 112, 113b.

L'élément 102 comprend des parties constitutives 121, 122, 123a, 123b, 124, 125 qui sont rigoureusement identiques aux parties constitutives 111, 112, 113a, 113c, 114, 115 de l'élément 101 et les éléments 103 et 104 présentent également la même structure. Les éléments 101, 102, 103, 104 sont en contact les uns avec les autres selon des plans axiaux 110, 120, 130 répartis en croix. Les différentes bobines statoriques 114, 124, 134, 144 en forme de haricot réparties autour du tube 10 présentent une forme qui diminue la variation du champ magnétique radial sur un tour et ménagent entre elles de petits espaces libres pour permettre le clipsage des deux moitiés d'électro-aimant à l'aide des circlips 65, 75 (fig 1).

Les paliers magnétiques actifs radiaux 60, 70 sont équipés de façon classique de moyens de détection des variations d'entrefer entre les électro-aimants de stator et le rotor 10. On a représenté à titre d'exemple sur la figure 1 des détecteurs radiaux 66, 76 disposés à proximité des paliers radiaux 60, 70.

Les détecteurs 66, 76 peuvent être réalisés de façons très diverses et peuvent être de type conique avec des pôles successifs sur un tour ou de type homopolaire (à flux axial) comme les électro-aimants de palier pour être moins sensibles aux pollutions du moteur électrique voisin 80. Les détecteurs 66, 76 travaillent directement en répulsion sur le rotor massif 10, sans qu'il soit rapporté de paquet de tôle sur le rotor, avec une fréquence de porteuse qui peut être réduite à moins de 5 kHz. De façon plus particulière les détecteurs 66, 76 sont avantageusement réalisés également en poudre de fer à grains isolés agglomérés par pression isostatique.

D'autres moyens connus de détection de la position du rotor 10 par rapport aux paliers magnétiques 60, 70 peuvent naturellement être utilisés.

Un ou plusieurs paliers magnétiques actifs axiaux peuvent également être utilisés pour maintenir axialement le rotor 10 par rapport au bâti.

Sur la figure 1, on a représenté un tube 10 présentant à sa partie inférieure une bride 17 sur laquelle vient agir l'extrémité libre 77 de la partie inférieure 72 de l'électro-aimant de palier radial 70. De la sorte, le palier magnétique 70 sert également de palier axial vis-à-vis du tube 10. Un détecteur axial 90 est disposé en regard du tube 10 de façon concentrique à la bobine 74 du palier magnétique 70. Le détecteur axial 90 peut comprendre des éléments de stator 94, 95 coopérant avec un insert 96 disposé dans la paroi du tube 10 en regard des éléments 94, 95.

La figure 5 montre une variante de réalisation dans laquelle la partie inférieure 72 de l'électro-aimant de palier magnétique 70 constitue une pièce polaire conique 78 coopérant avec une extrémité libre 18 du tube 10 qui est également conique de façon à créer un palier à action radiale et axiale. Sur la figure 5 on a par ailleurs représenté une bague flottante d'étanchéité 23 qui peut être analogue à la bague supérieure 22.

## Revendications

1. Dispositif de montage et d'entraînement d'une broche notamment d'une broche textile comprenant un tube (10) qui est monté par rapport à un bâti (50) à l'aide de premier et deuxième paliers magnétiques radiaux (60, 70) à flux axial et est entraîné en rotation à l'aide d'un moteur (80),
caractérisé en ce que le tube (10) est monté sans contact par rapport au bâti (50) en forme de carter, à l'aide desdits premier et deuxième paliers magnétiques radiaux (60, 70) à flux axial du type paliers magnétiques actifs et disposés respectivement à une première extrémité du tube (10) et à une deuxième extrémité de celui-ci et entre lesquels est interposé ledit moteur (80) du type moteur électrique, en ce que chacun des paliers magnétiques actifs radiaux (60, 70) comprend un circuit magnétique de stator composé de quatre éléments (101 à 104) à flux axial jointifs selon des plans axiaux (110, 120, 130, 140) et répartis autour du tube (10), et en ce que des moyens sont prévus pour créer à l'intérieur de la broche au niveau de l'entrefer des palier magnétiques radiaux (60, 70) et du moteur électrique (80) une pression réduite de l'ordre de quelques centaines de pascals à quelques milliers de pascals.

2. Dispositif selon la revendication 1, caractérisé en ce que les circuits magnétiques de stator à quatre éléments jointifs (101 à 104) des paliers magnétiques actifs radiaux (60, 70) sont composés chacun de deux sous-ensembles (61,62 ; 71,72) de quatre éléments jointifs réunis selon un plan de joint radial (63; 73) et maintenus assemblés par des pinces ou circlips (65 ; 75).

3. Dispositif selon la revendication 1 ou la revendication 2, caractérisé en ce les circuits magnétiques de stator des paliers magnétiques actifs radiaux (60 ; 70) sont réalisés en poudre de fer à grains isolés agglomérés par pressage isostatique à chaud.

4. Dispositif selon la revendication 2, caractérisé en ce que au moins l'un (70) des premier et deuxième paliers magnétiques actifs radiaux (70) comprend un circuit magnétique de stator avec un deuxième sous-ensemble (72) de quatre éléments jointifs qui est dissymétrique par rapport au premier sous-ensemble (71) de quatre éléments jointifs, pour jouer également le rôle de palier axial vis-à-vis d'une bride horizontale (17) du tube (10).

5. Dispositif selon l'une quelconque des revendications 1 à 4, caractérisé en ce que la dépression régnant au niveau de l'entrefer des paliers magnétiques radiaux (60 ; 70) et du moteur électrique (80) est de l'ordre de 1300 pascals.

6. Dispositif selon l'une quelconque des revendications 1 à 5, caractérisé en ce que la dépression régnant au niveau de l'entrefer des paliers magnétiques radiaux 60, 70) et du moteur électrique (80) est réalisée lors du montage.

7. Dispositif selon l'une quelconque des revendications 1 à 5, caractérisé en ce que la dépression régnant au niveau de l'entrefer des paliers magnétiques radiaux (60, 70) et du moteur électrique (80) est maintenue en permanence en fonctionnement à l'aide d'une pompe à vide de faible débit.

8. Dispositif selon l'une quelconque des revendications 1 à 7, caractérisé en ce qu'il comprend à au moins l'une de ses extrémités une bague flottante d'étanchéité (22) fixée par une membrane souple sur le carter (51) de la broche.

9. Dispositif selon l'une quelconque des revendications 1 à 7, caractérisé en ce qu'il comprend à au moins l'une de ses extrémités une bague flottante d'étanchéité (21) fixée par une membrane souple sur le carter (51) de la broche et réalisée en graphite, céramique ou carbone, tel que le matériau carbone diamant ADLC, et présente une course flexible dans le sens radial limitée à quelques centièmes de millimètre de manière à constituer également un palier de secours.

10. Dispositif selon l'une quelconque des revendications 1 à 9, caractérisé en ce qu'il comprend des circuits de commande des paliers magnétiques actifs (60, 70) et du moteur électrique (80) disposés au moins en partie sur un circuit imprimé souple (30) fixé sur le carter (50) en forme de couronne extérieure au moteur électrique (80).

11. Dispositif selon l'une quelconque des revendications 1 à 10, caractérisé en ce qu'il comprend des détecteurs radiaux (66, 76) et axiaux (90) en poudre de fer à grains isolés agglomérés par pression isostatique à chaud et coopérant directement par répulsion avec la paroi massive du tube (10).

12. Dispositif selon l'une quelconque des revendications 1 à 11, caractérisé en ce qu'il comprend un surmoulage de l'ensemble des éléments disposés entre le tube (10) et le carter extérieur (50).

## Patentansprüche

1. Vorrichtung zu Montage und zum Antrieb einer Spindel, insbesondere einer Textilspindel, mit einem Rohr (10), das in Bezug auf ein Maschinengestell (50) mit Hilfe eines ersten und zweiten magnetischen Radiallagers (60, 70) mit axialem Magnetfluß angebracht ist und zu Drehung mit Hilfe eines Motors (80) angetrieben ist,
dadurch gekennzeichnet, daß das Rohr (10) in Bezug auf das Maschinengestell (50) in Form eines Gehäuses ohne Berührung mit Hilfe des genannten ersten und zweiten magnetischen Radiallagers (60, 70) mit axialem Magnetfluß angebracht ist, die der Art nach aktive Magnetlager sind und jeweils an einem ersten bzw. zweiten Ende des Rohres (10) angeordnet sind, und zwischen denen der genannte Motor (80) angeordnet ist, der der Art nach ein Elektromotor ist, daß jedes der aktiven magnetischen Radiallager (60, 70) eine magnetische Statorschaltung aufweist, die aus vier Elementen (101 bis 104) mit axialem Magnetfluß zusammengesetzt ist, die längs axialer Ebenen (110, 120, 130, 140) zusammengefügt sind und rund um das Rohr (10) verteilt sind, und daß Mittel vorgesehen sind, um im Inneren der Spindel auf Höhe des Luftspalts dei magnetischen Radiallager (60, 70) und des Elektromotors (80) einen verringerten Druck in der Größenordnung von einigen hundert Pascal bis zu einigen tausend Pascal zu erzeugen.

2. Vorrichtung nach Anspruch 1, dadurch gekennzeichnet, daß die magnetischen Statorschaltungen mit vier aneinander angrenzenden Elementen (101 bis 104) der aktiven magnetischen Radiallager (60, 70) jeweils aus zwei Untergruppen (61, 62; 71, 72) aus vier aneinander angrenzenden Elementen zusammengesetzt sind, die längs einer radialen Verbindungsebene (63; 73) vereint sind und durch Klemmen oder Federbügel (65; 75) zusammenmontiert sind.

3. Vorrichtung nach Anspruch 1 oder Anspruch 2, dadurch gekennzeichnet, daß die magnetischen Statorschaltungen der aktiven magnetischen Radiallager (60; 70) aus Eisenpulver mit isolierten Körnern gebildet sind, die durch isostatisches Warmverpressen zusammengebacken sind.

4. Vorrichtung nach Anspruch 2, dadurch gekennzeichnet, daß mindestens das eine (70) des ersten und zweiten aktiven, magnetischen Radiallagers (70) eine magnetische Statorschaltung mit einer zweiten Untergruppe (72) aus vier aneinander angrenzenden Elementen aufeist, die in Bezug auf die erste Untergruppe (71) aus vier aneinander angrenzenden Elementen asymmetrisch ist, um auch die Rolle eines Axiallagers gegenüber einem horizontalen Flansch (17) des Rohres (10) zu spielen.

5. Vorrichtung nach irgendeinem der Ansprüche 1 bis 4, dadurch gekennzeichnet, daß der niedrige Druck, der auf Höhe des Luftspalts der magnetischen Radiallager (60; 70) und des Elektromotors (80) vorliegt, in der Größenordnung von 1300 Pascal liegt.

6. Vorrichtung nach irgendeinem der Ansprüche 1 bis 5, dadurch gekennzeichnet, daß der niedrige Druck, der auf Höhe des Luftspalts der magnetischer Radiallager (60; 70) und des Elektromotors (80) vorliegt, während der Montage hergestellt ist.

7. Vorrichtung nach irgendeinem der Ansprüche 1 bis 5, dadurch gekennzeichnet, daß der niedrige Druck, der auf Höhe des Luftspalts der magnetischen Radiallager (60, 70) und des Elektromotors (80) vorliegt, ständig mit Hilfe einer Vakuumpumpe mit geringem Durchsatz aufrechterhalten wird.

8. Vorrichtung nach irgendeinem der Ansprüche 1 bis 7, dadurch gekennzeichnet, daß sie mindestens an einem ihrer Enden einen schwimmenden Dichtungsring (22) aufweist, der durch eine weiche Membran auf dem Gehäuse (51) der Spindel befestigt ist.

9. Vorrichtung nach irgendeinem der Ansprüche 1 bis 7, dadurch gekennzeichnet, daß sie mindestens an einem ihrer Enden einen schwimmenden Dichtungsring (21) aufweist, der durch eine weiche Membran auf dem Gehäuse (51) der Spindel befestigt ist und aus Graphit, Keramik oder Carbon bzw. Kohlenstoff, wie etwa einem Diamant-Carbonmaterial ADLC, hergestellt ist und einen in radialer Richtung auf einige Hundertstel Millimeter begrenzten Bewegungsweg aufweist, um auf diese Weise auch ein Sicherheitslager zu bilden.

10. Vorrichtung nach irgendeinem der Ansprüche 1 bis 9, dadurch gekennzeichnet, daß sie Steuerschaltungen für die aktiven magnetischen Lager (60, 70) und den Elektromotor (80) aufweist, die mindestens teilweise auf einer flexiblen, gedruckten Schaltung (30) angeordnet sind, die auf dem Maschinengestell (50) in Form einer äußeren Kappe an dem Elektromotor (80) befestigt ist.

11. Vorrichtung nach irgendeinem der Ansprüche 1 bis 10, dadurch gekennzeichnet, daß sie radiale Fühler (66, 76) und axiale Fühler (90) aus Eisenpulver aus isolierten Körnern aufweist, die durch isostatisches Warmverpressen zusammengebacken sind und unmittelbar durch Abstoßung mit der massiven Wand des Rohres (10) zusammenwirken.

12. Vorrichtung nach irgendeinem der Ansprüche 1 bis 11, dadurch gekennzeichnet, daß sie einen Formmantel für die Anordnung von Elementen aufweist, die zwischen dem Rohr (10) und dem äußeren Maschinengestell (50) angeordnet sind.

## Claims

1. A device for mounting and driving a spindle, in particular a textile spindle comprising a tube (10) mounted relative to a frame (50) by means of first and second axial-flux radial magnetic bearings (60, 70) and rotated by means of a motor (80),
the device being characterized in that the tube (10) is mounted without contact relative to the frame (50) which is in the form of a casing, by means of said first and second axial-flux radial magnetic bearings (60, 70) of the active magnetic bearing type and disposed respectively at a first end of the tube (10) and at a second end thereof, with said motor (80) of the electric motor type being disposed between them, in that each of the radial active magnetic bearings (60, 70) comprises a stator magnetic circuit made up of four axial-flux touching elements (101 to 104) in axial planes (110, 120, 130, 140) and distributed around the tube (10), and in that means are provided to create a reduced pressure of the order of a few hundreds of Pascals to a few thousands of Pascals inside the spindle in the air gaps of the radial magnetic bearings (60, 70) and of the electric motor (80).

2. A device according to claim 1, characterized in that each stator magnetic circuit comprising four touching elements (101 to 104) of the radial active magnetic bearings (60, 70) is made up of two subassemblies (61,62; 71,72) each comprising four touching elements, the subassemblies being united in a radial join plane (63; 73) and being held together by clamps or clips (65; 75).

3. A device according to claim 1 or claim 2, characterized in that the stator magnetic circuits of the radial active magnetic bearings (60; 70) are made of iron powder comprising insulated particles compacted by hot isostatic pressing.

4. A device according to claim 2, characterized in that at least one of the first and second radial active magnetic bearings (70) includes a stator magnetic circuit having a second subassembly (72) of four touching elements which is asymmetrical relative to the first subassembly (71) of four touching elements, so as to act also as an axial bearing co-operating with a horizontal flange (17) of the tube (10).

5. A device according to any one of claims 1 to 4, characterized in that the reduced pressure in the air gaps of the radial magnetic bearings (60; 70) and of the electric motor (80) is of the order of 1,300 Pascals.

6. A device according to any one of claims 1 to 5, characterized in that the reduced pressure in the air gaps of the radial magnetic bearings (60, 70) and of the electric motor (80) is established during assembly.

7. A device according to any one of claims 1 to 5, characterized in that the reduced pressure in the air gaps of the radial magnetic bearings (60, 70) and of the electric motor (80) is maintained permanently in operation by means of a low rate vacuum pump.

8. A device according to any one of claims 1 to 7, characterized in that it includes a floating sealing ring (22) at at least one of its ends and fixed to the casing (51) of the spindle by means of a flexible membrane.

9. A device according to any one of claims 1 to 7, characterized in that it includes a floating sealing ring (21) at at least one of its ends and fixed to the casing (51) of the spindle by means of a flexible membrane, and made of graphite, ceramic, or carbon, such as amorphous diamond-like carbon ADLC, and presents a flexible stroke in the radial direction that is limited to a few hundredths of a millimeter so as also to constitute an emergency bearing.

10. A device according to any one of claims 1 to 9, characterized in that it includes control circuits for the active magnetic bearings (60, 70) and for the electric motor (80) disposed at least in part on a flexible printed circuit (30) fixed to the casing (50) in the form of a ring outside the electric motor (80).

11. A device according to any one of claims 1 to 10, characterized in that it includes radial and axial detectors (66,76; 90) of iron powder comprising insulated particles compacted by hot isostatic pressing and co-operating directly by repulsion with the solid wall of the tube (10).

12. A device according to any one of claims 1 to 11, characterized in that the elements disposed between the tube (10) and the outer casing (50) are overmolded as a whole.
